# EUROPÄISCHE PATENTSCHRIFT

(11) **EP 3 259 560 B1**
(45) Veröffentlichungstag und Bekanntmachung des Hinweises auf die Patenterteilung: **17.06.2020**
(21) Anmeldenummer: 16701646.8
(22) Anmeldetag: 27.01.2016
(51) Int. Cl.: G01D 11/24, E01F 11/00

(54) **SENSORVORRICHTUNG**
SENSOR APPARATUS
DISPOSITIF DE DÉTECTION

(30) Priorität: 17.02.2015 DE 102015202781
(43) Veröffentlichungstag der Anmeldung: 27.12.2017
(73) Patentinhaber: Robert Bosch GmbH, 70442 Stuttgart (DE)
(72) Erfinder: FEYH, Ando, 72135 Dettenhausen (DE); SCHMID, Ronny, 72766 Reutlingen (DE)
(86) Internationale Anmeldenummer: PCT/EP2016/051628
(87) Internationale Veröffentlichungsnummer: WO 2016/131618

(56) Entgegenhaltungen:
- EP-A1- 0 259 523
- EP-A1- 1 227 452
- WO-A1-97/28519
- WO-A1-2006/005208
- FR-A1- 2 532 601
- US-A1- 2012 007 749
- US-A1- 2012 293 339

## Beschreibung

### Stand der Technik

Sensoren als solche sind bekannt. In der Regel sind Sensoren an einem Objekt befestigt und messen physikalische Größen in einem Umfeld des Objekts. So messen zum Beispiel Verkehrsflusssensoren, die an einem Mast an einer Straße befestigt sind, einen Verkehrsfluss auf der Straße.

Bei Sensoren, die an einem Objekt befestigt sind, besteht die Gefahr, dass diese gestohlen oder beschädigt werden können.

Die Offenlegungsschrift WO 97/28519 A1 zeigt einen Detektor.

Die Offenlegungsschrift US 2012/293339 A1 zeigt ein elektronisches Gehäuse.

Die Offenlegungsschrift WO 2006/005208 A1 zeigt ein Detektionsterminal.

Die Offenlegungsschrift FR 2 532 601 A1 zeigt eine Vorrichtung zum Detektieren einer Anwesenheit eines geparkten Fahrzeugs.

Aus der US 2012/007749 A1 ist eine Sensorvorrichtung mit einer Sensorkapsel und einer Halterung an einer Verkehrsinfrastruktur bekannt.

### Offenbarung der Erfindung

Die der Erfindung zugrunde liegende Aufgabe kann darin gesehen werden, ein effizientes Konzept bereitzustellen, welches es ermöglicht, eine unzulässige Krafteinwirkung auf eine Sensorkapsel zu detektieren.

Diese Aufgabe wird mittels des Gegenstands des unabhängigen Anspruchs gelöst. Vorteilhafte Ausgestaltungen der Erfindung sind Gegenstand von abhängigen Unteransprüchen.

Die Erfindung umfasst also insbesondere und unter anderem den Gedanken, eine unzulässige Krafteinwirkung auf die Sensorkapsel zu detektieren, indem mittels des Prozessors Sensordaten von einem oder von mehreren des einen oder der mehreren Sensoren ausgewertet oder analysiert werden. Dadurch wird insbesondere der technische Vorteil bewirkt, dass effizient erkannt werden kann, wenn eine Kraft auf die Sensorkapsel einwirkt, die nicht zulässig, also unzulässig, ist. Die Sensorvorrichtung kann somit selbst erfassen, wenn eine unzulässige Krafteinwirkung auf sie wirkt. Es bedarf also hierfür keiner externen Überwachungssysteme, die eine solche unzulässige Krafteinwirkung detektieren können. Dadurch ist also weiterhin insbesondere eine effiziente, effektive und Kosten sparende Möglichkeit geschaffen, eine unzulässige Krafteinwirkung auf die Sensorkapsel zu detektieren.

Erfindungsgemäß ist vorgesehen, dass die Sensorvorrichtung ferner eine Kommunikationsschnittstelle umfasst, die ausgebildet ist, im Fall einer detektierten unzulässigen Krafteinwirkung eine über die unzulässige Krafteinwirkung informierende Nachricht auszusenden. Dadurch wird insbesondere der technische Vorteil bewirkt, dass Personen und/oder Systeme, die sich extern von der Sensorvorrichtung befinden, über die unzulässige Krafteinwirkung informiert werden können. Diese können dann insbesondere in vorteilhafter Weise entsprechende Maßnahmen ergreifen.

Nach einer Ausführungsform ist vorgesehen, dass die Sensorkapsel die Kommunikationsschnittstelle umfasst.

Nach einer Ausführungsform ist vorgesehen, dass die Halterung die Kommunikationsschnittstelle umfasst.

Nach einer weiteren Ausführungsform ist vorgesehen, dass sowohl die Halterung als auch die Sensorkapsel jeweils eine Kommunikationsschnittstelle umfassen.

Erfindungsgemäß ist vorgesehen, dass die Kommunikationsschnittstelle ausgebildet ist, im Fall einer detektierten unzulässigen Krafteinwirkung Sensordaten des einen oder der mehreren Sensoren auszusenden. Dadurch wird insbesondere der technische Vorteil bewirkt, dass Personen und/oder Systeme, die sich extern von der Sensorvorrichtung befinden, die Sensordaten erhalten können und diese somit in vorteilhafter Weise auswerten können. Somit kann zum Beispiel auch nachträglich die detektierte unzulässige Krafteinwirkung näher analysiert werden.

Sensordaten im Sinne der vorliegenden Erfindung umfassen insbesondere Messdaten von Messungen, die mittels des einen oder der mehreren Sensoren durchgeführt wurden.

Nach einer Ausführungsform ist vorgesehen, dass der eine oder die mehreren Sensoren einen Positionssensor zum Erfassen einer Position der Sensorkapsel umfassen, so dass die mittels der Kommunikationsschnittstelle ausgesendeten Sensordaten der erfassten Position entsprechende Positionsdaten umfassen. Dadurch wird insbesondere der technische Vorteil bewirkt, dass Personen und/oder Systeme, die sich extern von der Sensorvorrichtung befinden, über eine Position der Sensorkapsel informiert werden können.

Erfindungsgemäß ist vorgesehen, dass die Kommunikationsschnittstelle und/oder der Prozessor ausgebildet sind, im Fall einer unzulässigen Krafteinwirkung die auszusendende Nachricht und/oder die auszusendenden Sensordaten mit einem Zeitstempel zu versehen. Dadurch wird insbesondere der technische Vorteil bewirkt, dass ein Zeitpunkt der unzulässigen Krafteinwirkung respektive der auszusendenden Sensordaten auch Personen und/oder Systemen, die sich extern von der Sensorvorrichtung befinden, bekanntgemacht werden kann. Der Zeitstempel kennzeichnet somit insbesondere einen Zeitpunkt der unzulässigen Krafteinwirkung.

Gemäß einer weiteren Ausführungsform ist vorgesehen, dass die Nachricht einen Aktivierungsbefehl für eine Überwachungseinrichtung zum Überwachen der Sensorvorrichtung umfasst, so dass die Überwachungseinrichtung ansprechend auf den Aktivierungsbefehl aktiviert werden kann, um die Sensorvorrichtung zu überwachen. Dadurch wird insbesondere der technische Vorteil bewirkt, dass mittels dieser externen Überwachungseinrichtung eine Überwachung der Sensorvorrichtung nach einem Auftreten einer unzulässigen Krafteinwirkung durchgeführt werden kann. Das heißt also zum Beispiel, dass die externe Überwachungseinrichtung nicht permanent aktiviert oder angeschaltet sein muss. Diese wird erst aktiviert oder angeschaltet ansprechend auf den Aktivierungsbefehl. Damit ist in vorteilhafter Weise bewirkt, dass die Überwachungseinrichtung effizient, insbesondere Strom sparend, betrieben werden kann.

Gemäß einer weiteren Ausführungsform ist vorgesehen, dass der Prozessor ausgebildet ist, basierend auf den Sensordaten eine Abweichung eines Ist-Zustands der Sensorkapsel von einem Soll-Zustand der Sensorkapsel zu detektieren, wobei der Prozessor ausgebildet ist, eine unzulässige Krafteinwirkung auf die Sensorkapsel basierend auf der Detektion der Abweichung zu detektieren. Dadurch wird insbesondere der technische Vorteil bewirkt, dass eine effiziente und einfache Detektion der unzulässigen Krafteinwirkung durchgeführt werden kann.

Gemäß einer weiteren Ausführungsform ist vorgesehen, dass der Prozessor ausgebildet ist, basierend auf den Sensordaten einen momentanen Ist-Zustand der Sensorkapsel als den Soll-Zustand zu definieren. Dadurch wird insbesondere der technische Vorteil bewirkt, dass ein bekannter Ist-Zustand, zum Beispiel bei einer Erstinstallation der Sensorvorrichtung, als der Soll-Zustand definiert werden kann.

Ein Zustand der Sensorkapsel umfasst insbesondere eine Position und/oder eine Lage der Sensorkapsel. Das heißt also zum Beispiel, dass der Ist-Zustand eine Ist-Lage und/oder eine Ist-Position der Sensorkapsel ist. Der Soll-Zustand ist dann entsprechend insbesondere eine Soll-Position und/oder eine Soll-Lage. Das heißt also insbesondere, dass nach einer Ausführungsform eine Abweichung einer Ist-Lage respektive Ist-Position der Sensorkapsel von einer Ist-Lage respektive Ist-Position der Sensorkapsel detektiert wird, wobei dann entsprechend die unzulässige Krafteinwirkung detektiert wird.

Denn eine Krafteinwirkung auf die Sensorkapsel wird in der Regel zu einer Bewegung der Sensorkapsel führen. Diese wird zum Beispiel durch eine unzulässige Krafteinwirkung aus ihrer Montageposition verschoben.

In einer anderen Ausführungsform ist vorgesehen, dass der Prozessor ausgebildet ist, im Fall einer detektierten unzulässigen Krafteinwirkung auf die Sensorkapsel, einen oder mehrere der einen oder der mehreren Sensoren zu deaktivieren. Dadurch wird insbesondere der technische Vorteil bewirkt, dass ein Dieb die Sensorkapsel nicht mehr verwenden kann aufgrund der deaktivierten Sensoren, zumindest ist nur noch eine eingeschränkte Verwendung der Sensorkapsel möglich. Insbesondere ist der Prozessor ausgebildet, im Fall einer detektierten unzulässigen Krafteinwirkung auf die Sensorkapsel, sämtliche Sensoren, die sich innerhalb der Sensorkapsel befinden, zu deaktivieren. Insbesondere werden sämtliche Sensoren bis auf einen Positionssensor deaktiviert. Das heißt also, dass zumindest noch eine Position der Sensorkapsel über die Kommunikationsschnittstelle gesendet werden kann. Insbesondere wird das Deaktivieren nach einem Senden der Nachricht durchgeführt.

Nach einer Ausführungsform umfasst das Senden, dass eine entsprechende Nachricht respektive entsprechende Sensordaten über ein Kommunikationsnetzwerk gesendet werden. Ein Kommunikationsnetzwerk umfasst zum Beispiel ein WLAN- und/oder ein Mobilfunknetzwerk. Insbesondere wird respektive ist eine Kommunikation über das Kommunikationsnetzwerk verschlüsselt.

Nach einer Ausführungsform ist vorgesehen, dass die Sensorkapsel lösbar in der Halterung befestigt ist. Dadurch wird insbesondere der technische Vorteil bewirkt, dass die Sensorkapsel ausgetauscht werden kann, ohne zugleich die Halterung auszutauschen. Ferner wird in vorteilhafter Weise bewirkt, dass die Halterung noch ohne die Sensorkapsel an die Verkehrsinfrastruktur befestigt werden kann. Dies kann eine Montage oder auch Demontage der Halterung vereinfachen. Insbesondere kann bei einer Befestigung oder Demontage der Halterung an respektive von die respektive der Verkehrsinfrastruktur verhindert werden, dass die Sensorkapsel beschädigt wird. Denn diese kann zur Montage respektive Demontage von der Halterung entfernt werden. Dies aufgrund der lösbaren Befestigung.

Des Weiteren weist dieses Konzept den Vorteil auf, dass eine kosteneffiziente Installation und Deinstallation der Sensorvorrichtung bewirkt werden kann. Denn so kann, wenn die Sensorvorrichtung nur temporär an einer Verkehrsinfrastruktur angeordnet sein soll, nach einer Nutzungsdauer lediglich die Sensorkapsel entfernt werden, wohingegen die Halterung weiterhin an der Verkehrsinfrastruktur befestigt bleibt. Das heißt also, dass die Sensorkapsel anschließend an einer anderen Halterung wiederverwendet werden kann. Somit entstehen bei diesem Konzept in der Regel lediglich Kosten betreffend die Halterung.

Nach einer Ausführungsform ist vorgesehen, dass die Sensorkapsel und die Halterung einteilig gebildet sind. Das heißt also insbesondere, dass die Halterung und die Sensorkapsel ein gemeinsames Bauteil bilden.

Gemäß einer weiteren Ausführungsform ist vorgesehen, dass die Halterung an einer Verkehrsinfrastruktur befestigt ist.

Nach einer Ausführungsform ist vorgesehen, dass der oder die Sensoren einen oder mehrere der folgenden Sensoren umfassen: einen Umfeldsensor, einen Parksensor zum Erfassen eines Belegtzustands einer Parkposition, einen Verkehrssensor zum Überwachen eines Verkehrsflusses und/oder zum Messen einer Verkehrsdichte und/oder einen Lagersensor zum Überwachen einer Containerbelegung und/oder einen Umweltsensor, insbesondere einen Gassensor.

Ein Umfeldsensor ist beispielsweise: ein Ultraschallsensor, ein Lidarsensor, ein Lasersensor, ein Radarsensor oder ein Videosensor. Mittels eines solchen Umfeldsensors ist insbesondere eine sensorische Erfassung eines Umfelds der Sensorkapsel ermöglicht.

Der Parksensor ist beispielsweise als ein Umfeldsensor gebildet.

Der Verkehrssensor ist zum Beispiel als ein Umfeldsensor gebildet.

Der Lagersensor ist zum Beispiel als ein Umfeldsensor gebildet.

Durch die Verwendung eines Parksensors kann in vorteilhafter Weise bewirkt werden, dass ein Belegtzustand einer Parkposition, beispielsweise einer Parkposition eines Parkplatzes, erfasst werden kann. Das heißt also, dass ein Parksensor im Sinne der vorliegenden Erfindung erfassen kann, ob eine Parkposition belegt oder nicht belegt ist, also frei ist. Eine solche Sensorvorrichtung wird nach einer Ausführungsform zur Überwachung eines Belegtzustands einer Parkposition verwendet.

Bei der Verwendung eines Verkehrssensors kann die Sensorvorrichtung somit in vorteilhafter Weise für eine Überwachung eines Verkehrsflusses und/oder für eine Messung einer Verkehrsdichte verwendet werden, was nach einer Ausführungsform so vorgesehen ist.

Bei der Verwendung eines Lagersensors kann nach einer Ausführungsform die Sensorvorrichtung für eine Überwachung einer Containerbelegung verwendet werden, was nach einer Ausführungsform so vorgesehen ist. Dies beispielsweise in einem Lager für Container.

Nach einer weiteren Ausführungsform ist vorgesehen, dass die Verkehrsinfrastruktur einen Parkplatz umfasst, innerhalb welchem die Halterung befestigt ist, oder eine Straße umfasst, an welcher die Halterung befestigt ist, oder ein Containerlager umfasst, innerhalb welchem die Halterung befestigt ist.

Das heißt also insbesondere, dass die Halterung innerhalb eines Parkplatzes befestigt ist. Ein solcher Parkplatz ist eine Verkehrsinfrastruktur. Ein Parkplatz im Sinne der vorliegenden Erfindung kann auch als eine Parkfläche bezeichnet werden und dient als Abstellfläche für Fahrzeuge. Der Parkplatz bildet somit insbesondere eine zusammenhängende Fläche, die mehrere Stellplätze (bei einem Parkplatz auf privatem Grund) oder Parkstände (bei einem Parkplatz auf öffentlichem Grund) aufweist. Der Parkplatz kann nach einer Ausführungsform von einem Parkhaus umfasst sein. insbesondere ist der Parkplatz von einer Garage umfasst. Eine Parkposition im Sinne der vorliegenden Erfindung ist also insbesondere ein Stellplatz oder ein Parkstand.

Das heißt also insbesondere weiterhin, dass die Halterung beispielsweise an einer Decke, einer Wand oder an einer Säule oder auf einer Parkfläche oder auf einem Parkstand eines Parkplatzes, zum Beispiel einer Garage, angeordnet oder befestigt ist.

In einer anderen Ausführungsform umfasst die Verkehrsinfrastruktur ein feststehendes oder stationäres Objekt, welches an einer Straße angeordnet ist.

Zum Beispiel kann es sich hierbei um ein Verkehrszeichen, eine Lichtsignalanlage, eine Brücke oder einen Tunnel handeln.

Das heißt also insbesondere, dass die Halterung zum Beispiel an einer Brücke, einem Tunnel, einer Lichtsignalanlage, einer Laterne, einem Verkehrsschild angeordnet sein kann respektive ist. Die Sensorvorrichtung kann dann in effizienter Weise für eine Überwachung des Verkehrsflusses und/oder für eine Messung einer Verkehrsdichte verwendet werden.

Die Halterung ist zum Beispiel innerhalb eines Lagers angeordnet. Beispielsweise ist die Halterung an einem Containerlagerplatz angeordnet.

Nach einer Ausführungsform ist vorgesehen, dass der oder die Sensoren, basierend auf welchen der Prozessor eine unzulässige Krafteinwirkung auf die Sensorkapsel detektieren kann, einen oder mehrere der folgenden Sensoren umfassen: Bewegungssensor, Beschleunigungssensor, Lagesensor, Drehratensensor und Magnetsensor.

Ein Bewegungssensor ist insbesondere ausgebildet, eine Bewegung der Sensorkapsel zu erfassen oder zu detektieren. Das heißt also insbesondere, dass eine Bewegung der Sensorkapsel mittels des Bewegungssensors detektiert wird respektive werden kann.

Ein Beschleunigungssensor ist insbesondere ausgebildet, eine Beschleunigung der Sensorkapsel zu erfassen oder zu detektieren. Somit kann also in vorteilhafter Weise eine Beschleunigung der Sensorkapsel erfasst werden.

Ein Lagesensor ist insbesondere ausgebildet, eine Lage der Sensorkapsel zu erfassen oder zu detektieren. Somit kann also in vorteilhafter Weise eine Lage der Sensorkapsel erfasst oder detektiert werden.

Ein Drehratensensor ist insbesondere ausgebildet, eine Drehrate der Sensorkapsel zu erfassen oder zu detektieren. Somit kann zum Beispiel detektiert oder erfasst werden, wenn sich die Sensorkapsel dreht.

Ein Magnetsensor (auch Magnetfeldsensor genannt) ist insbesondere ausgebildet, ein Magnetfeld zu erfassen. Zum Beispiel kann ein Magnet in der Halterung angeordnet sein. Wenn nun die Sensorkapsel von der Halterung entfernt wird, so wird der Magnetsensor ein schwächeres oder gar kein Magnetfeld mehr messen. Somit kann also in vorteilhafter Weise detektiert oder erfasst werden, wenn die Sensorkapsel von der Halterung entfernt wird.

Die Erfindung umfasst also insbesondere und unter anderem den Gedanken, eine Bewegung/oder eine Lageänderung der Sensorkapsel mittels zumindest einem der vorstehend genannten Sensoren zu erfassen, also insbesondere mittels eines Bewegungssensors und/oder eines Beschleunigungssensors und/oder eines Lagesensors und/oder eines Drehratensensors und/oder eines Magnetsensors. Denn eine Krafteinwirkung auf die Sensorkapsel führt in der Regel zu einer Bewegung respektive Beschleunigung respektive Lageänderung respektive einer Drehrate. Dies kann mittels der vorstehend genannten Sensoren also erfasst werden.

Zum Ermitteln, ob eine erfasste Krafteinwirkung unzulässig ist oder nicht, ist nach einer Ausführungsform vorgesehen, dass eine oder mehrere mittels der vorstehend genannten Sensoren erfassten oder gemessenen Messgrößen mit entsprechenden Schwellwerten verglichen werden, wobei abhängig von dem Vergleich die Krafteinwirkung als zulässig oder als unzulässig klassifiziert wird. Der Prozessor ist also nach einer Ausführungsform ausgebildet, diesen Vergleich und diese Klassifizierung durchzuführen.

So ist zum Beispiel eine erfasste Krafteinwirkung unzulässig, wenn eine erfasste oder gemessene Drehrate größer oder größer gleich einem vorbestimmten Drehratenschwellwert ist.

So ist zum Beispiel eine erfasste Krafteinwirkung unzulässig, wenn eine erfasste oder gemessene Beschleunigung größer oder größer gleich einem vorbestimmten Beschleunigungsschwellwert ist.

So ist zum Beispiel eine erfasste Krafteinwirkung unzulässig, wenn eine erfasste oder gemessene Lageänderung größer oder größer gleich einem vorbestimmten Lageänderungsschwellwert ist.

So ist zum Beispiel eine erfasste Krafteinwirkung unzulässig, wenn ein erfasstes oder gemessenes Magnetfeld kleiner oder kleiner gleich einem vorbestimmten Magnetfeldschwellwert ist.

Nach einer Ausführungsform ist vorgesehen, dass die Halterung ausschließlich eine Befestigungsfunktionalität aufweist. Dadurch wird insbesondere der technische Vorteil bewirkt, dass eine technisch einfache und kostengünstige Halterung verwendet werden kann. Denn diese muss lediglich eine Befestigungsfunktionalität aufweisen. Dass die Halterung ausschließlich eine Befestigungsfunktionalität aufweist, heißt also insbesondere, dass die Halterung ausschließlich zur Befestigung der Sensorkapsel an der Verkehrsinfrastruktur dient und entsprechend ausgebildet ist. Die Halterung hat also keine andere Aufgabe als eine Befestigungsaufgabe.

In einer hierzu alternativen Ausführungsform ist vorgesehen, dass die Halterung zusätzlich zur Befestigungsfunktionalität noch eine oder mehrere weitere Funktionalitäten aufweist. Dadurch wird insbesondere der technische Vorteil bewirkt, dass eine effiziente und effektive Nutzung der Halterung bewirkt werden kann. Denn obwohl nur ein Bauteil vorgesehen ist, weist dieses mehrere Funktionen auf.

In einer anderen Ausführungsform ist vorgesehen, dass die Halterung eine Kommunikationsschnittstelle aufweist, die ausgebildet ist, Sensordaten des oder der Sensoren über ein Kommunikationsnetzwerk zu senden, so dass die Halterung als weitere Funktionalität eine Kommunikationsfunktionalität aufweist. Dadurch wird insbesondere der technische Vorteil bewirkt, dass die Sensordaten über ein Kommunikationsnetzwerk gesendet werden können, zum Beispiel an Teilnehmer des Kommunikationsnetzwerks. Somit können die Sensordaten auch entfernt von der Sensorvorrichtung bereitgestellt und gegebenenfalls analysiert werden.

Nach einer Ausführungsform ist vorgesehen, dass die Sensorkapsel eine Kommunikationsschnittstelle aufweist, die ausgebildet ist, Sensordaten des oder der Sensoren über ein Kommunikationsnetzwerk zu senden. Das heißt also insbesondere, dass die Sensorkapsel eine Kommunikationsfunktionalität aufweist. Auch dadurch kann insbesondere der technische Vorteil bewirkt werden, dass die Sensordaten Teilnehmern des Kommunikationsnetzwerks zur Verfügung gestellt werden können.

In einer weiteren Ausführungsform ist vorgesehen, dass die Kommunikationsschnittstelle der Sensorkapsel ausgebildet ist, die Sensordaten des oder der Sensoren an die Kommunikationsschnittstelle der Halterung zu senden. Dies beispielsweise über ein Kommunikationsnetzwerk. Insbesondere ist entsprechend die Kommunikationsschnittstelle der Halterung ausgebildet, diese Sensordaten des oder der Sensoren von der Kommunikationsschnittstelle der Sensorkapsel zu empfangen.

Das heißt also insbesondere, dass nach einer Ausführungsform vorgesehen ist, dass eine Kommunikationsverbindung zwischen der Halterung und der Sensorkapsel gebildet ist. Dies insbesondere dann, wenn die Sensorkapsel lösbar in der Halterung befestigt ist. Die Kommunikationsverbindung umfasst insbesondere eine drahtlose und/oder eine drahtgebundene Kommunikationsverbindung. Entsprechend sind die Kommunikationsschnittstellen der Sensorkapsel und der Halterung ausgebildet.

Nach einer Ausführungsform ist die drahtgebundene Kommunikationsverbindung mittels elektrischer Kontakte gebildet.

Nach einer Ausführungsform ist eine drahtlose Kommunikationsverbindung mittels einer Spule gebildet. Zum Beispiel umfasst die drahtlose Kommunikationsverbindung eine NFC-Kommunikationsverbindung. Hierbei "NFC" für "Near Field Communication", also Nahfeldkommunikation.

Nach einer Ausführungsform ist vorgesehen, dass die drahtlose Kommunikationsverbindung eine optische Kommunikationsverbindung umfasst. Eine optische Kommunikationsverbindung kann beispielsweise mittels LEDs gebildet sein. Hierbei steht LED für "Light Emitting Diode", also Leuchtdiode.

Das heißt also, dass nach einer Ausführungsform die Kommunikationsschnittstelle ausgebildet ist, die Sensordaten mittels einer optischen Kommunikationsverbindung von dem oder den Sensoren zu empfangen. Das heißt also insbesondere, dass die Sensordaten optisch von der Sensorkapsel an die Halterung übertragen werden. Die Sensorkapsel umfasst zum Beispiel eine oder mehrere LEDs zur Übertragung von Sensordaten an die Halterung.

In einer weiteren Ausführungsform ist vorgesehen, dass die Halterung einen elektrischen Energiespeicher zum Versorgen des oder der Sensoren mit elektrischer Energie aufweist, so dass die Halterung als weitere Funktionalität eine Energieversorgungsfunktionalität aufweist. Dadurch wird insbesondere der technische Vorteil bewirkt, dass die Sensoren oder der Sensor mit elektrischer Energie versorgt werden können. Dadurch kann beispielsweise auf einen separaten elektrischen Energiespeicher in der Sensorkapsel verzichtet werden. Sofern aber ein solcher elektrischer Energiespeicher in der Sensorkapsel vorhanden sein sollte, kann der elektrische Energiespeicher der Halterung als ein redundanter elektrischer Energiespeicher verwendet werden. Somit ist also eine Redundanz betreffend eine elektrische Energieversorgung des oder der Sensoren geschaffen.

In einer anderen Ausführungsform ist vorgesehen, dass die Halterung einen Datenspeicher zum Speichern von Sensordaten des oder der Sensoren umfasst. Dadurch wird insbesondere der technische Vorteil bewirkt, dass die Sensordaten abgespeichert werden können, sodass sie beispielsweise noch zu einem späteren Zeitpunkt zur Verfügung gestellt werden können. Ein Datenspeicher umfasst insbesondere einen flüchtigen und/oder nichtflüchtigen Datenspeicher.

In einer anderen Ausführungsform ist vorgesehen, dass die Halterung einen Datenspeicher zum Speichern von Sensordaten des oder der Sensoren und einen elektrischen Energiespeicher zum Puffern der in dem Datenspeicher gespeicherten Sensordaten aufweist, so dass die Halterung als weitere Funktionalitäten eine Sensordatenspeicherungsfunktionalität und eine Sensordatenpufferfunktionalität aufweist. Dadurch wird insbesondere der technische Vorteil bewirkt, dass die Sensordaten auch noch zu einem späteren Zeitpunkt zur Verfügung gestellt werden können. Aufgrund der Sensordatenpufferfunktionalität bleiben die Daten beispielsweise auch bei einem Ausfall einer Primärenergieversorgung, beispielsweise durch den Energiespeicher der Sensorkapsel, erhalten.

In einer anderen Ausführungsform ist vorgesehen, dass die Halterung eine Erfassungseinrichtung umfasst, die ausgebildet ist, eine Anzahl von Sensorkapseltauschzyklen zu erfassen, so dass die Halterung als weitere Funktionalität eine Sensorkapseltauschzyklenverfolgungsfunktionalität aufweist. Dadurch wird insbesondere der technische Vorteil bewirkt, dass verfolgt werden kann, wie oft die Sensorkapsel bereits getauscht wurde.

In einer anderen Ausführungsform ist vorgesehen, dass die Halterung einen Prozessor umfasst, der ausgebildet ist, den oder die Sensoren zu programmieren, so dass die Halterung als weitere Funktionalität eine Sensorprogrammierungsfunktionalität aufweist. Dadurch wird insbesondere der technische Vorteil bewirkt, dass der oder die Sensoren programmiert werden können. So kann beispielsweise der Prozessor eine neue Firmware in den oder die Sensoren schreiben oder flashen. Dadurch kann beispielsweise ein Sensor neu justiert werden. Eventuelle Fehler, die während der Herstellung des Sensors oder der Sensoren beim Sensor oder bei den Sensoren aufgetreten sind, können somit gegebenenfalls nachträglich per Software korrigiert werden.

In einer anderen Ausführungsform ist vorgesehen, dass die lösbare Befestigung mittels eines Bajonettverschlusses und/oder mittels einer Verschraubung und/oder mittels einer Verrastung und/oder mittels einer Verklipsung und/oder mittels einer Klebverbindung und/oder mittels eines Einlegens der Sensorkapsel in die Halterung gebildet ist. Durch die vorstehend genannten Befestigungsarten wird insbesondere der technische Vorteil bewirkt, dass eine effiziente lösbare Befestigung der Sensorkapsel an der Halterung ermöglicht ist.

Nach einer Ausführungsform umfasst die Sensorkapsel einen Speicher, insbesondere einen elektronischen und/oder magnetischen Speicher. Insbesondere ist ein solcher Speicher ein Datenspeicher für die Sensordaten.

Nach einer Ausführungsform umfasst die Sensorkapsel einen Mikrocontroller zur Steuerung des Sensors oder der Sensoren.

Nach einer Ausführungsform umfasst die Sensorkapsel einen Schalter zum An- oder Ausschalten des Sensors oder der Sensoren, also einem An-/Aus-Schalter.

Nach einer Ausführungsform umfasst die Sensorkapsel ein Bedienelement oder mehrere Bedienelemente zum Bedienen des Sensors oder der Sensoren.

Nach einer Ausführungsform umfasst die Sensorkapsel einen elektrischen Energiespeicher zur elektrischen Energieversorgung des oder der Sensoren und gegebenenfalls beispielsweise von weiteren elektronischen Bauteilen, die innerhalb der Sensorkapsel angeordnet sind, wie zum Beispiel ein Speicher und/oder eine Mikrocontroller.

Nach einer Ausführungsform erfüllt die Sensorkapsel eine vorbestimmte Schutzart gemäß den bekannten IP-Codes. Hierbei steht die Abkürzung "IP" für "International Protection". Für die Codierung der IP-Codes gibt es beispielsweise die DIN EN 60529 oder die VDE 0470-1 oder die DIN 40050 Teil 9. Das heißt also insbesondere, dass die Sensorkapsel die in ihr angeordneten Elemente gegen äußere Einflüsse abkapselt und somit schützt.

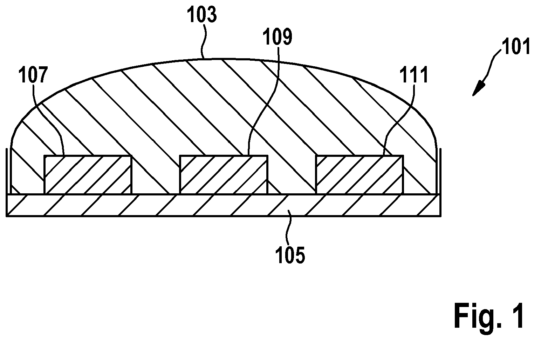

Die Erfindung wird im Folgenden anhand von bevorzugten Ausführungsbeispielen näher erläutert. Hierbei zeigt
- Fig. 1: eine Sensorvorrichtung.

Fig. 1 zeigt eine Sensorvorrichtung 101.

Die Sensorvorrichtung 101 umfasst eine Sensorkapsel 103 sowie eine Halterung 105 zum Befestigen der Sensorkapsel 103 an einer Verkehrsinfrastruktur.

Die Sensorkapsel 103 ist lösbar in der Halterung 105 befestigt. Das heißt also, dass die Sensorkapsel 103 und die Halterung 105 zwei getrennt voneinander gebildete Bauteile sind.

In einer nicht gezeigten Ausführungsform ist vorgesehen, dass die Sensorkapsel 103 und die Halterung 105 ein gemeinsames Bauteil bilden, also integral gebildet sind.

In der Sensorkapsel 103 ist ein Sensor 107 angeordnet, der zum Beispiel ein Umfeldsensor ist. Zum Beispiel ist der Sensor 107 ein Parksensor zum Erfassen eines Belegtzustands einer Parkposition.

Innerhalb der Sensorkapsel 103 ist ferner ein Beschleunigungssensor 109 angeordnet. Mittels des Beschleunigungssensors 109 ist es möglich, eine Beschleunigung der Sensorkapsel 103 zu messen oder zu erfassen. Zum Beispiel kann eine solche Beschleunigung auftreten, wenn die Sensorkapsel 103 aus ihrer Halterung 105 entfernt wird. Beispielsweise kann eine solche Beschleunigung auftreten, wenn eine äußere Kraft auf die Sensorkapsel 103 wirkt. Zum Beispiel kann eine solche Beschleunigung entstehen, wenn auf die Sensorkapsel 103 geschlagen wird.

Innerhalb der Sensorkapsel 103 ist ferner ein Prozessor 111 angeordnet. Der Prozessor 111 ist ausgebildet, basierend auf den Sensordaten des Beschleunigungssensors 109 eine unzulässige Krafteinwirkung auf die Sensorkapsel 103 zu detektieren. Das heißt also insbesondere, dass der Prozessor 111 ausgebildet ist, die Beschleunigungsdaten, die einer gemessenen Beschleunigung entsprechen, des Beschleunigungssensors 109 dahingehend zu analysieren oder auszuwerten, um die unzulässige Krafteinwirkung auf die Sensorkapsel 103 zu detektieren. Beispielsweise ist ein Beschleunigungsschwellwert vorgesehen, unterhalb welchem eine gemessene Beschleunigung noch als eine zulässige Beschleunigung klassifiziert wird. Das heißt also, dass die Kraft, die zu dieser Beschleunigung führte, noch als eine zulässige Kraft klassifiziert wird. Oberhalb des Beschleunigungsschwellwerts ist vorgesehen, dass die gemessene Beschleunigung als eine unzulässige Beschleunigung klassifiziert wird. Entsprechend ist die Kraft, die zu dieser Beschleunigung führte, eine unzulässige Kraft. In diesem Fall fand also eine unzulässige Krafteinwirkung auf die Sensorkapsel 103 statt.

In einer nicht gezeigten Ausführungsform ist vorgesehen, dass zusätzlich oder anstelle zum Beschleunigungssensor 109 zumindest einer oder mehrere der folgenden Sensoren vorgesehen sind: Bewegungssensor, Lagesensor, Drehratensensor und Magnetsensor. Entsprechend ist dann der Prozessor 111 ausgebildet, die Sensordaten der jeweiligen Sensoren dahingehend auszuwerten, ob eine unzulässige Krafteinwirkung auf die Sensorkapsel 103 wirkt respektive stattgefunden hat. Dies insbesondere mittels eine Vergleichs der Sensordaten mit einem Schwellwert, also zum Beispiel mit einem Bewegungsschwellwert, Lageänderungsschwellwert, Drehratenschwellwert, Magnetfeldschwellwert.

Somit ist es also in vorteilhafter Weise ermöglicht, zum Beispiel eine Positions- oder Lageänderung der Sensorkapsel 103 zu erfassen. Insbesondere ist ein Soll-Zustand, also zum Beispiel eine Soll-Position oder eine Soll-Lage der Sensorkapsel 103 definiert. Der Prozessor 111 ist insbesondere ausgebildet, basierend auf den Sensordaten der jeweiligen Sensoren einen Ist-Zustand der Sensorkapsel 103 zu erfassen, zum Beispiel eine Ist-Position oder eine Ist-Lage. Der Prozessor 111 kann dann entsprechend eine Abweichung von diesem Ist-Zustand von dem Soll-Zustand ermitteln und die ermittelte Abweichung als zulässig oder unzulässig klassifizieren.

In einer nicht gezeigten Ausführungsform ist vorgesehen, dass zusätzlich oder anstelle zum Sensor 107 noch weitere Sensoren vorgesehen sind. Zum Beispiel sind weitere Umfeldsensoren vorgesehen. Insbesondere ist ein Gassensor vorgesehen.

Somit kann zum Beispiel mittels der Sensorvorrichtung 101 ein Belegtzustand einer Parkposition erfasst werden. Insbesondere kann mittels der Sensorvorrichtung 101 ein Verkehrsfluss und/oder eine Verkehrsdichte gemessen werden. Insbesondere kann mittels der Sensorvorrichtung 101 eine Gaskonzentration im Umfeld der Sensorvorrichtung 101 erfasst oder gemessen werden.

In einer nicht gezeigten Ausführungsform ist innerhalb der Sensorkapsel 103 zusätzlich zumindest eines der folgenden Elemente angeordnet: elektrischer Energiespeicher, Mikrocontroller, Datenspeicher, Kommunikationsschnittstelle.

Die Erfindung umfasst also insbesondere und unter anderem den Gedanken, zum Beispiel eine ungewünschte Fremdeinwirkung auf die Sensorvorrichtung zu erfassen. Eine solche erfasste ungewünschte Fremdeinwirkung, also allgemein die unzulässige Krafteinwirkung, kann zum Beispiel einem Betreiber der Sensorvorrichtung gemeldet werden. Dies insbesondere dadurch, dass eine über die unzulässige Krafteinwirkung informierende Nachricht mittels einer Kommunikationsschnittstelle im Fall einer detektierten unzulässigen Krafteinwirkung ausgesendet wird.

In einer nicht gezeigten Ausführungsform ist vorgesehen, dass bei Erkennung der Fremdeinwirkung und/oder eines Diebstahls, also allgemein einer unzulässigen Krafteinwirkung, ein oder mehrere der Sensoren, die innerhalb der Sensorkapsel angeordnet sind, deaktiviert werden. Dies insbesondere vor einer Übertragung einer Nachricht, insbesondere vor einer Übertragung der Nachricht an eine Systemzentrale und/oder an einen Betreiber, oder erst nach einer Übertragung der Nachricht.

Insbesondere können mittels des erfindungsgemäßen Konzepts folgende Wirkungen erzielt werden: eine Abschreckung, Sicherheit, Betriebszuverlässigkeit, wirksamer Investitionsschutz und damit eine nachhaltige Funktionsfähigkeit der Sensorvorrichtung.

Der erfindungsgemäße Gedanke umfasst also insbesondere, in eine Sensorkapsel ein zusätzliches Sensorelement einzubringen. Zusätzlich deshalb, da dieser Sensor neben der Hauptfunktion der Sensorvorrichtung eine unsachgemäße Bewegung und eine Lageänderung der Sensorkapsel erfassen soll. Dieses zusätzliche Sensorelement ist also insbesondere ein Sensor, zum Beispiel ein Bewegungssensor, ein Beschleunigungssensor, ein Lagesensor, Drehratensensor oder Magnetsensor. Insbesondere sind mehrere zusätzliche Sensorelemente vorgesehen.

Das zusätzliche Sensorelement umfasst also insbesondere Sensoren zur Lagedetektion und/oder Bewegungsdetektion, insbesondere einen Beschleunigungssensor, und/oder einen Drehratensensor und/oder einen Magnetsensor.

Nach einer Ausführungsform ist also vorgesehen, dass eine Lageabweichung der Sensorkapsel von einer ursprünglichen Einbaulage (eine solche Lageabweichung entspricht zum Beispiel einer unsachgemäßen Entfernung) oder eine externe Schockeinwirkung (dies entspricht zum Beispiel einem Vandalismus) oder eine Bewegungsdetektion (dies entspricht zum Beispiel einer unsachgemäßen Entfernung) mittels des zusätzlichen Sensorelements oder der zusätzlichen Sensorelemente, also mittels der vorstehend genannten Sensoren, erfasst werden.

Diese erfasste Lageabweichung respektive externe Schockeinwirkung respektive Bewegungsdetektion wird nach einer Ausführungsform mittels einer Kommunikationsschnittstelle ausgesendet. Dies zum Beispiel an einen Betreiber der Sensorvorrichtung. Das heißt also, dass über eine durch die Sensorkapsel bereitgestellte vorhandene Funkkonnektivität (hier Kommunikationsschnittstelle) an den Betreiber übermittelt wird, dass eine Lageabweichung respektive eine externe Schockeinwirkung respektive eine Bewegungsdetektion stattgefunden hat.

Nach einer Ausführungsform ist vorgesehen, dass weitere Daten, wie zum Beispiel Positionsdaten und/oder ein Zeitstempel, die durch die Sensoren der Sensorkapsel erfasst werden oder darin hinterlegt sind, bei Bedarf mittels der Kommunikationsschnittstelle übermittelt oder ausgesendet werden.

Nach einer Ausführungsform ist vorgesehen, dass als Reaktion auf einen Empfang dieser Daten und/oder der Nachricht eine externe Überwachungseinrichtung zum Überwachen der Sensorvorrichtung aktiviert wird. Das heißt also, dass eine sich in einer Umgebung, zum Beispiel einem Parkhaus, vorhandene Kamera zwecks Überwachungszwecken hierdurch aktiviert werden kann respektive wird.

Nach einer Ausführungsform umfasst die externe Überwachungseinrichtung einen oder mehrere Umfeldsensoren. Bei diesen Umfeldsensoren kann es sich zum Beispiel um einen der vorstehend genannten Umfeldsensoren handeln.

Nach einer Ausführungsform ist zum Beispiel ansprechend auf einen Empfang der Nachricht und/oder der Daten ein automatisierter Service-Technikerruf vorgesehen. Das heißt also insbesondere, dass automatisiert ein Service-Techniker gerufen wird.

Nach einer Ausführungsform wird eine korrekte Lage (Soll-Lage) der Sensorkapsel (allgemein ein korrekter Zustand, also ein Soll-Zustand) bei einer erstmaligen Installation der Sensorkapsel zusammen mit einer Konfiguration der weiteren Betriebsparameter eingelernt.

Das erfindungsgemäße Konzept ist insbesondere auch bei einteilig ausgebildeten Sensorvorrichtungen vorgesehen. Eine einteilige Sensorvorrichtung bezeichnet eine Sensorvorrichtung, bei welcher die Sensorkapsel und die Halterung als ein gemeinsames Bauteil gebildet sind.

Das erfindungsgemäße Konzept kann also insbesondere für Parksensoren für ein Parkraummanagement angewendet werden. Insbesondere kann das erfindungsgemäße Konzept für Sensoren zur Messung und/oder Überwachung eines Verkehrsflusses und/oder einer Verkehrsdichte angewendet werden. Insbesondere kann das erfindungsgemäße Konzept für Sensoren zur Überwachung von einer Containerbelegung und/oder einer Überwachung in einem Containerlager verwendet werden. Insbesondere kann das erfindungsgemäße Konzept für Umweltsensoren innerhalb und/oder außerhalb von Gebäuden angewendet werden. Ein Umweltsensor ist zum Beispiel ein Gassensor.

## Patentansprüche

1. Sensorvorrichtung (101), umfassend:
- eine Sensorkapsel (103),
- innerhalb welcher ein oder mehrere Sensoren (107, 109) angeordnet sind,
- eine Halterung (105) zum Befestigen der Sensorkapsel (103) an einer Verkehrsinfrastruktur, wobei
- in der Sensorkapsel (103) ein Prozessor (111) angeordnet ist, der ausgebildet ist, basierend auf Sensordaten von einem oder von mehreren des einen oder der mehreren Sensoren (107, 109) eine unzulässige Krafteinwirkung auf die Sensorkapsel (103) zu detektieren,
- umfassend ferner eine Kommunikationsschnittstelle, die ausgebildet ist, im Fall einer detektierten unzulässigen Krafteinwirkung eine über die unzulässige Krafteinwirkung informierende Nachricht und Sensordaten des einen oder der mehreren Sensoren (107, 109) auszusenden,
- wobei die Kommunikationsschnittstelle und/oder der Prozessor (111) ausgebildet sind, im Fall einer unzulässigen Krafteinwirkung die auszusendende Nachricht und/oder die auszusendenden Sensordaten mit einem Zeitstempel zu versehen.

2. Sensorvorrichtung (101) nach Anspruch 1, wobei der eine oder die mehreren Sensoren (107, 109) einen Positionssensor zum Erfassen einer Position der Sensorkapsel (103) umfassen, so dass die mittels der Kommunikationsschnittstelle ausgesendeten Sensordaten der erfassten Position entsprechende Positionsdaten umfassen.

3. Sensorvorrichtung (101) nach einem der Ansprüche 1 bis 2, wobei die Nachricht einen Aktivierungsbefehl für eine Überwachungseinrichtung zum Überwachen der Sensorvorrichtung (201) umfasst, so dass die Überwachungseinrichtung ansprechend auf den Aktivierungsbefehl aktiviert werden kann, um die Sensorvorrichtung (201) zu überwachen.

4. Sensorvorrichtung (101) nach einem der vorherigen Ansprüche, wobei der Prozessor (111) ausgebildet ist, basierend auf den Sensordaten eine Abweichung eines Ist-Zustands der Sensorkapsel (103) von einem Soll-Zustand der Sensorkapsel (103) zu detektieren, wobei der Prozessor (111) ausgebildet ist, eine unzulässige Krafteinwirkung auf die Sensorkapsel (103) basierend auf der Detektion der Abweichung zu detektieren.

5. Sensorvorrichtung (101) nach Anspruch 4, wobei der Prozessor (111) ausgebildet ist, basierend auf den Sensordaten einen momentanen Ist-Zustand der Sensorkapsel (103) als den Soll-Zustand zu definieren.

6. Sensorvorrichtung (101) nach einem der vorherigen Ansprüche, wobei der Prozessor (111) ausgebildet ist, im Fall einer detektierten unzulässigen Krafteinwirkung auf die Sensorkapsel (103), einen oder mehrere der einen oder der mehreren Sensoren (107, 109) zu deaktivieren.

7. Sensorvorrichtung (101) nach einem der vorherigen Ansprüche, wobei die Sensorkapsel (103) lösbar in der Halterung (105) befestigt ist.

8. Sensorvorrichtung (101) nach einem der Ansprüche 1 bis 6, wobei die Sensorkapsel (103) und die Halterung (105) einteilig gebildet sind.

9. Sensorvorrichtung (101) nach einem der vorherigen Ansprüche, wobei die Halterung (105) an einer Verkehrsinfrastruktur befestigt ist.

10. Sensorvorrichtung (101) nach einem der vorherigen Ansprüche, wobei der oder die Sensoren (107, 109) einen oder mehrere der folgenden Sensoren umfassen: einen Umfeldsensor (107), einen Parksensor zum Erfassen eines Belegtzustands einer Parkposition, einen Verkehrssensor zum Überwachen eines Verkehrsflusses und/oder zum Messen einer Verkehrsdichte und/oder einen Lagersensor zum Überwachen einer Containerbelegung und/oder einen Umweltsensor, insbesondere einen Gassensor.

11. Sensorvorrichtung (101) nach einem der vorherigen Ansprüche, wobei der oder die Sensoren (107, 109), basierend auf welchen der Prozessor (111) eine unzulässige Krafteinwirkung auf die Sensorkapsel (103) detektieren kann, einen oder mehrere der folgenden Sensoren umfassen: Bewegungssensor, Beschleunigungssensor (109), Lagesensor, Drehratensensor und Magnetsensor.

## Claims

1. Sensor apparatus (101) comprising:
- a sensor capsule (103)
- inside which one or more sensors (107, 109) are arranged,
- a holder (105) for fastening the sensor capsule (103) to a traffic infrastructure, wherein
- a processor (111) is arranged in the sensor capsule (103) and is designed to detect an impermissible application of force to the sensor capsule (103) on the basis of sensor data from one or more of the one or more sensors (107, 109),
- also comprising a communication interface which is designed, if an impermissible application of force is detected, to emit a message informing of the impermissible application of force and sensor data from the one or more sensors (107, 109),
- wherein the communication interface and/or the processor (111) is/are designed, in the event of an impermissible application of force, to provide the message to be emitted and/or the sensor data to be emitted with a time stamp.

2. Sensor apparatus (101) according to Claim 1, wherein the one or more sensors (107, 109) comprise a position sensor for capturing a position of the sensor capsule (103), with the result that the sensor data emitted by means of the communication interface comprise position data corresponding to the captured position.

3. Sensor apparatus (101) according to one of Claims 1 to 2, wherein the message comprises an activation command for a monitoring device for monitoring the sensor apparatus (201), with the result that the monitoring device can be activated in response to the activation command in order to monitor the sensor apparatus (201).

4. Sensor apparatus (101) according to one of the preceding claims, wherein the processor (111) is designed to detect a deviation of an actual state of the sensor capsule (103) from a desired state of the sensor capsule (103) on the basis of the sensor data, wherein the processor (111) is designed to detect an impermissible application of force to the sensor capsule (103) on the basis of the detection of the deviation.

5. Sensor apparatus (101) according to Claim 4, wherein the processor (111) is designed to define an instantaneous actual state of the sensor capsule (103) as the desired state on the basis of the sensor data.

6. Sensor apparatus (101) according to one of the preceding claims, wherein the processor (111) is designed, if an impermissible application of force to the sensor capsule (103) is detected, to deactivate one or more of the one or more sensors (107, 109).

7. Sensor apparatus (101) according to one of the preceding claims, wherein the sensor capsule (103) is releasably fastened in the holder (105).

8. Sensor apparatus (101) according to one of Claims 1 to 6, wherein the sensor capsule (103) and the holder (105) are formed in one part.

9. Sensor apparatus (101) according to one of the preceding claims, wherein the holder (105) is fastened to a traffic infrastructure.

10. Sensor apparatus (101) according to one of the preceding claims, wherein the sensor(s) (107, 109) comprise(s) one or more of the following sensors: a surroundings sensor (107), a parking sensor for capturing an occupied state of a parking position, a traffic sensor for monitoring a traffic flow and/or for measuring a traffic density and/or a warehouse sensor for monitoring container occupancy and/or an environmental sensor, in particular a gas sensor.

11. Sensor apparatus (101) according to one of the preceding claims, wherein the sensor(s) (107, 109), on the basis of which the processor (111) can detect an impermissible application of force to the sensor capsule (103), comprise(s) one or more of the following sensors: motion sensor, acceleration sensor (109), position sensor, rate-of-rotation sensor and magnetic sensor.

## Revendications

1. Dispositif de détection (101), comprenant :
- une capsule de détection (103),
- à l'intérieur de laquelle sont disposés un ou plusieurs capteurs (107, 109),
- un support (105) permettant la fixation de la capsule de détection (103) sur une infrastructure routière, dans lequel
- un processeur (111), conçu pour détecter, à partir des données de détection de l'un ou de plusieurs desdits un ou plusieurs capteurs (107, 109), l'application illicite d'une force à la capsule de détection (103), est disposé dans la capsule de détection (103),
- comprenant en outre une interface de communication qui est conçue, lorsque l'application illicite d'une force est détectée, pour transmettre un message informant sur l'application illicite d'une force et des données de détection dudit un ou desdits multiples capteurs (107, 109),
- dans lequel l'interface de communication et/ou le processeur (111) sont conçus pour doter le message à transmettre et/ou les données de détection à transmettre d'un marqueur temporel en cas d'application illicite d'une force.

2. Dispositif de détection (101) selon la revendication 1, dans lequel ledit un ou lesdits multiples capteurs (107, 109) comprennent un capteur de position destiné à détecter une position de la capsule de détection (103), de manière à ce que les données de détection transmises au moyen de l'interface de communication comprennent des données de position correspondant à la position détectée.

3. Dispositif de détection (101) selon l'une des revendications 1 à 2, dans lequel le message comprend une instruction d'activation pour un dispositif de surveillance destiné à surveiller le dispositif de détection (201), de manière à ce que le dispositif de surveillance puisse être activé en réponse à l'instruction d'activation afin de surveiller le dispositif de détection (201).

4. Dispositif de détection (101) selon l'une des revendications précédentes, dans lequel le processeur (111) est conçu pour détecter, à partir des données de détection, un écart d'un état réel de la capsule de détection (103) par rapport à un état de consigne de la capsule de détection (103), dans lequel le processeur (111) est conçu pour détecter l'application illicite d'une force sur la capsule de détection (103) à partir de la détection de l'écart.

5. Dispositif de détection (101) selon la revendication 4, dans lequel le processeur (111) est conçu pour définir à partir des données de détection un état réel actuel de la capsule de détection (103) en tant qu'état de consigne.

6. Dispositif de détection (101) selon l'une des revendications précédentes, dans lequel le processeur (111) est conçu pour désactiver un ou plusieurs desdits un ou plusieurs capteurs (107, 109) lors de l'application illicite d'une force sur la capsule de détection (103).

7. Dispositif de détection (101) selon l'une des revendications précédentes, dans lequel la capsule de détection (103) est fixée de manière amovible dans le support (105).

8. Dispositif de détection (101) selon l'une des revendications 1 à 6, dans lequel la capsule de détection (103) et le support (105) sont formés d'un seul tenant.

9. Dispositif de détection (101) selon l'une des revendications précédentes, dans lequel le support (105) est fixé à une infrastructure routière.

10. Dispositif de détection (101) selon l'une des revendications précédentes, dans lequel le ou les capteurs (107, 109) comprennent un ou plusieurs des capteurs suivants : un capteur d'environnement (107), un capteur de stationnement pour détecter un état d'occupation d'un emplacement de stationnement, un capteur de trafic pour surveiller un flux de trafic et/ou pour mesurer une densité de trafic et/ou un capteur de stationnement pour surveiller une occupation de conteneurs et/ou un capteur d'environnement, en particulier un capteur de gaz.

11. Dispositif de détection (101) selon l'une des revendications précédentes, dans lequel le ou les capteurs (107, 109) à partir desquels le processeur (111) peut détecter l'application illicite d'une force sur la capsule de détection (103) comprennent un ou plusieurs des capteurs suivants : capteur de mouvement, capteur d'accélération (109), capteur de position, capteur de vitesse de rotation et capteur magnétique.
